# EUROPEAN PATENT SPECIFICATION

(11) **EP 3 239 669 B1**
(45) Date of publication and mention of the grant of the patent: **26.11.2025**
(21) Application number: 15869737.5
(22) Date of filing: 24.11.2015
(51) Int. Cl.: G01J 3/46, G01J 3/02

(54) **COLORIMETRIC DATA PROCESSING DEVICE, COLORIMETRIC DATA PROCESSING SYSTEM, COLORIMETRIC DATA PROCESSING METHOD, AND COLORIMETRIC DATA PROCESSING PROGRAM**
VORRICHTUNG ZUR VERARBEITUNG KOLORIMETRISCHER DATEN, SYSTEM ZUR VERARBEITUNG KOLORIMETRISCHER DATEN, VERFAHREN ZUR VERARBEITUNG KOLORIMETRISCHER DATEN UND PROGRAMM ZUR VERARBEITUNG KOLORIMETRISCHER DATEN
DISPOSITIF DE TRAITEMENT DE DONNÉES COLORIMÉTRIQUES, SYSTÈME DE TRAITEMENT DE DONNÉES COLORIMÉTRIQUES, PROCÉDÉ DE TRAITEMENT DE DONNÉES COLORIMÉTRIQUES ET PROGRAMME DE TRAITEMENT DE DONNÉES COLORIMÉTRIQUES

(30) Priority: 16.12.2014 JP 2014254130
(43) Date of publication of application: 01.11.2017
(73) Proprietor: Konica Minolta, Inc., Tokyo 100-7015 (JP)
(72) Inventor: MATSUMOTO, Takuya, Tokyo 100-7015 (JP)
(74) Representative: Hoffmann Eitle
(86) International application number: PCT/JP2015/082838
(87) International publication number: WO 2016/098529

(56) References cited:
- JP-A- 2006 201 425
- JP-A- 2009 012 526
- JP-A- 2013 178 425
- JP-A- 2014 522 514
- US-A1- 2003 035 126
- US-A1- 2012 254 141
- KIRCHNER, E. J. J. ET AL.: "Setting Tolerances on Color and Texture for Automotive Coatings", COLOR RESEARCH AND APPLICATION, vol. 39, no. 1, February 2014 (2014-02-01), pages 88 - 98, XP055152561, ISSN: 0361-2317, DOI: doi:10.1002/col.21767

## Description

### Technical Field

The present invention relates to a technique of processing color measurement data, designed, e.g., for assembly manufacturers.

### Background Art

A color meter is a device capable of measuring a color, and is applied in various industrial fields for managing colors of a product. A color meter can be used not only independently but also in combination with a different device. As a specific example, the following Patent Literature 1 discloses a technique in which an IC tag is attached to a white calibration plate, and is, before start of a color measurement, read by an IC rag reader provided in a color meter, to thereby identify a type of the white calibration plate.

In the assembly industry, an assembly manufacturer purchases components (parts) from a plurality of component manufacturers, and assembles a product (finished products) using the purchased components. Management of colors of components forming an external appearance of a product is important for assembly manufacturers.

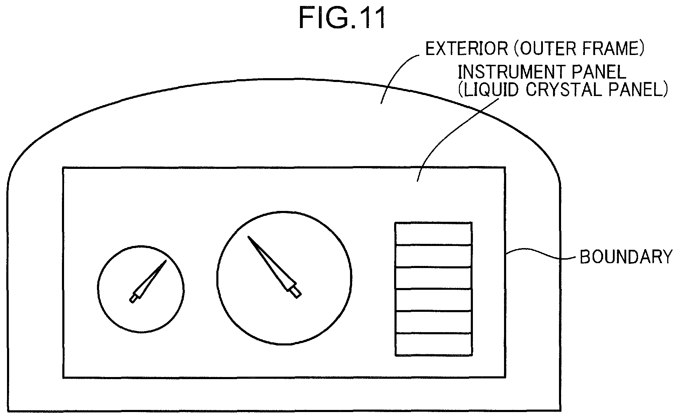

Specifically, as depicted in FIG. 11, in an automotive vehicle, there are some cases where a screen composed images indicative of instruments and a black background image is displayed on a liquid crystal panel, wherein the screen is used as an instrument panel. An exterior of the instrument panel (i.e., an outer frame of the liquid crystal panel) is a resin molded component. When the instrument panel and the exterior are visually integrated, they provide a beautiful design. For this purpose, it is necessary to make it difficult to visually recognize a boundary between the instrument panel and the exterior, and therefore a color of the exterior is set to black in conformity to the black background image.

However, the instrument panel and the exterior are generally produced, respectively, by different component manufacturers, so that there is a possibility that a boundary between the instrument panel and the exterior clearly appears due to a color difference between a black color of the background image in the screen of the instrument panel displayed on the liquid crystal panel and a black color of the exterior.

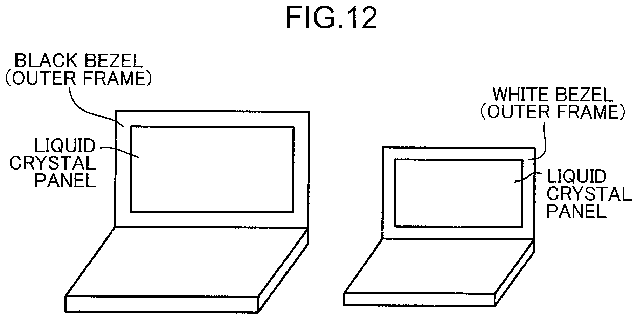

In smartphones, personal computers, liquid crystal televisions or the like, an outer frame of a liquid crystal panel is called "bezel". In this example, perception of color of a screen displayed on the crystal panel can vary depending on a color of the bezel (e.g., between a PC having a black bezel and a PC having a white bezel, as depicted in FIG. 12), even though a color of the screen displayed on the crystal panel is the same.

Although the above description has been made based on a comparison between a light-source color and an object color, the same problem occurs between two object colors, two light-source colors. Such a case will be described based on an example where, in an automotive vehicle, paint is applied to a vehicle body and a bumper with a view to making it difficult to visually recognize a boundary between the vehicle body and the bumper. Both of a color of the vehicle body coated with paint and a color of the bumper coated with paint are object colors. Generally, the vehicle body is made of a metal material, and the bumper is made of a resin material. Thus, when the same color paint is applied to each of the vehicle body and the bumper, a difference in base material causes a color difference in the boundary between the vehicle body and the bumper. Therefore, in order to prevent the occurrence of a color difference in the boundary, a color of paint to be applied to the vehicle body and a color of paint to be applied to the bumper are set to become slightly different from each other, instead of setting to become exactly identical to each other. However, despite such a setting, there are some cases where the occurrence of a color difference allowing visual recognition of the boundary between the vehicle body and the bumper is found only after comparison therebetween.

Thus, with respect to a first component (e.g., liquid crystal panel) and a second component (e.g., outer frame) each constituting a product, an assembly manufacturer has been obliged to conduct visual comparison between a color exhibited by the first component and a color exhibited by the second component. The visual comparison is subjective, and therefore it is desirable to compare these colors with each other, in a quantified manner.

### Citation List

### Patent Literature

Patent Literature 1: JP 2006-153498 A (paragraphs [0064] and [0065])

US 2003/0035126 A1 describes a system which enables electronic communication, coordination and dissemination of color-related designs, specifications and products. Color production and maintenance in a simultaneous fashion is provided between a plurality of disparate parties in substantially "real time." The described integrated color-production is said to be capable of importing electronic output from many diverse instruments, including color production-related hardware and software, and further uses the output to automatically deliver product data to and from a plurality of geographically disbursed parties. The described system is also said to provide an electronic library comprising colors and textures to be used for accurately matching a color sample and/or specification. The integrated, on-line color-related production system described therein is said to enable parties to operate at peak efficiency, producing high sales and customer satisfaction.

US 2012/0254141 A1 describes a computerized system and method for analyzing color consistency on automotive parts and for providing feedback on painting processes occurring in an assembly plant. The system and method facilitates data collection and analysis at numerous points during the assembly paint processes and the identification of possible adjustments so that parts are painted within a specified tolerance. Body and bumper parts are measured during an inspection process. Measurement and colorimetric data is stored in association with an identifier for the body part or bumper. Measurements relate to equipment and paint mix variables as well as environmental variables that influence the paint results. A software application facilitates analysis of the data and troubleshooting possible causes for color discrepancies. As the color trends away from a specified standard, paint process, including environmental, changes are made, prior to the painting of parts in the bumper or body so that color mismatches are prevented.

### Summary of Invention

It is an object of the present invention to provide a color measurement data processing device, a color measurement data processing system, a color measurement data processing method, and a color measurement data processing program, capable of mutually comparing respective colors exhibited by a first component and a second component each constituting a product, in a quantified manner.

In order to achieve the above object, according to one aspect of the present invention, there is provided a color measurement data processing device as set out in Claim 1.

According to another aspect of the present invention, there is provided a color measurement data processing system as set out in Claim 2.

According to a further aspect of the present invention, there is provided a color measurement data processing method as set out in Claim 4.

According to yet a further aspect of the present invention, there is provided a color measurement data processing program as set out in Claim 9.

The present invention makes it possible to mutually compare respective colors exhibited by a first component and a second component each constituting a product, in a quantified manner.

These and other objects, features, and advantages of the present invention will become apparent upon reading of the following detailed description along with the accompanying drawings.

### Brief Description of Drawings

FIG. 1 is a block diagram depicting a color measurement processing system according to one embodiment of the present invention.
FIG. 2 is a flowchart illustrating an operation to be executed by a first sub-system provided in the color measurement processing system depicted in FIG. 1.
FIG. 3 is a first half of a flowchart illustrating an operation to be executed by a color measurement data processing device provided in the color measurement processing system depicted in FIG. 1.
FIG. 4 is a second half of the flowchart.
FIG. 5 is a graph depicting a Yxy color system.
FIG. 6 is a flowchart illustrating a first modification of this embodiment.
FIG. 7 is an explanatory diagram illustrating a list of combinations of first identification information and second identification information.
FIG. 8 is an explanatory diagram illustrating a color measurement data correspondence list.
FIG. 9 is an explanatory diagram illustrating an acceptance and non-acceptance list.
FIG. 10 is a block diagram depicting a color measurement processing system of a second modification of this embodiment.
FIG. 11 is a schematic diagram depicting a liquid crystal panel for displaying an instrument panel, and an exterior thereof.
FIG. 12 is a schematic diagram depicting a PC having a black bezel and a PC having a white bezel.

### Description of Embodiments

Described herein is a color measurement data processing device comprising: a color measurement data receiving section which receives, via a network, first color measurement data representing a color exhibited by a first component constituting a product, and second color measurement data representing a color exhibited by a second component different from the first component and constituting the product; and a comparative data generation section which generates comparative data capable of enabling the color exhibited by the first component and the color exhibited by the second component to be compared with each other, using the first color measurement data and the second color measurement data received by the color measurement data receiving section.

With reference to the drawings, an embodiment of the present invention will be described in detail. In the figures, elements or components assigned with the same reference code mean that they are the same elements or components. In regard to such elements or components, duplicated description of already-described matters will be omitted.

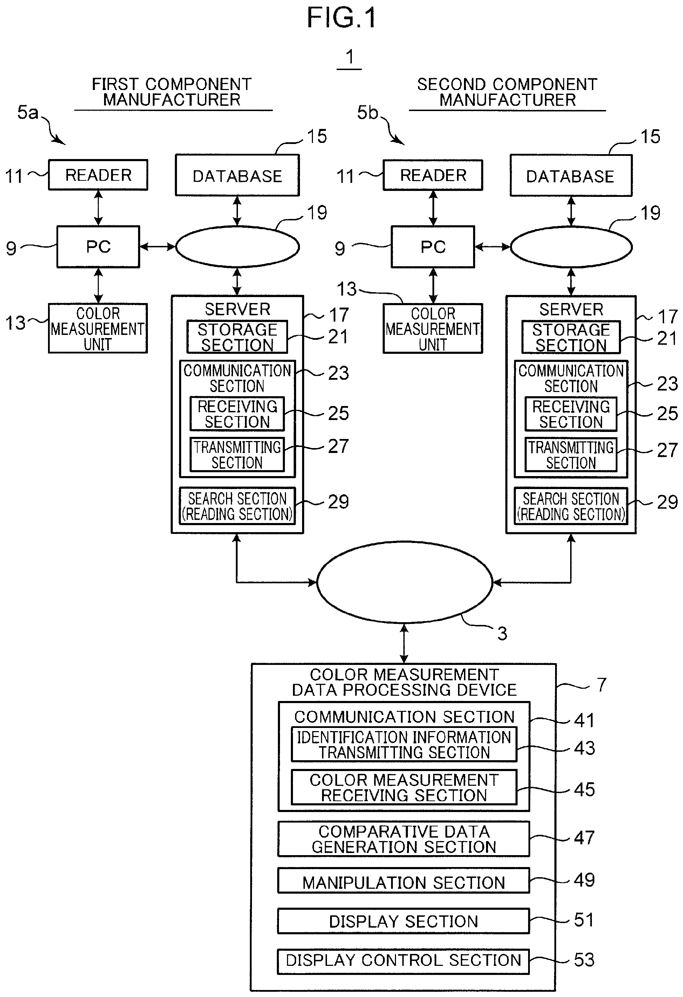

FIG. 1 is a block diagram depicting a color measurement processing system 1 according to one embodiment of the present invention. A first component manufacturer conducts an operation of manufacturing a first component, and measuring, as one quality inspection, a color exhibited by the first component. A second component manufacturer conducts an operation of manufacturing a second component, and measuring, as one quality inspection, a color exhibited by the second component. An assembly manufacturer conducts an operation of assembling a product (finished product) using the first component and the second component. The assembly manufacturer further conducts an operation of checking, as one quality inspection, whether a color difference between the color exhibited by the first component and the color exhibited by the second component falls within a prescribed standard.

A color exhibited by a component means a light-source color when the component is a light-emitting component (e.g., a display panel) (the light-source color is, for example, a color of a screen displayed on the display panel), or an object color when the component is a light reflective component such as a resin molded component (e.g., an outer frame of the display panel).

This embodiment is applicable in any of the following three cases: a first case where the color exhibited by one of the first and second components is a light-source color, and the color exhibited by the other of the first and second components is an object color; a second case where the color exhibited by each of the first and second components is a light-source color, and a third case where the color exhibited by each of the first and second components is an object color.

The color measurement processing system 1 comprises a first system 5a, a second system 5b and a color measurement data processing device 7 which are mutually connectable via the Internet 3 in accordance with the claimed invention. The first system 5a is a system established within the first component manufacturer. The second system 5b is a system established within the second component manufacturer. The color measurement data processing device 7 is disposed within the assembly manufacturer.

The first system 5a comprises a PC (Personal Computer) 9, a reader 11, a color measurement unit 13, a database 15, and a server 17. The PC 9, the database 15 and the server 17 are mutually connected via a LAN 19.

The PC 9 is connected to the reader 11 and the color measurement unit 13. The leader 11 is operable to read first identification information. The first identification information is defined as follows. The first component manufacturer is manufacturing a plurality of the first components. In order to distinguish the plurality of first components from each other, tags (e.g., IC tags or QA codes (trademark)) are affixed, respectively, to the plurality of first components.

The color measurement unit 13 is operable to measure a color exhibited by the first component. In the case where a color to be exhibited by the first component is a light-source color, a color measurement unit for measuring a light-source color is used as the color measurement unit 13. In the case where a color to be exhibited by the first component is an object color, a color measurement unit for measuring an object color is used as the color measurement unit 13. The color measurement unit 13 is operable, when it measures the color exhibited by the first component, to generate first color measurement data in which the color exhibited by the first component is expressed by a given color system. Examples of the given color system include an Lab color system and a Yxy color system.

The database 15 stores therein color data of the first component. The color data of the first component means data about all of the first components which have heretofore been manufactured by the first component manufacturer, wherein the first identification information and the first color measurement data of each of the first components are associated with each other.

The server 17 can be accessed via the Internet 3. The server 17 stores therein open data to be opened to the assembly manufacturer, among the color data of the first component stored in the database 15. For example, the open data is data about all of the first components delivered to the assembly manufacturer this month, wherein the first color measurement data and the first identification information of each of the first components are associated with each other.

The server 17 comprises a storage section 21, a communication section 23 and a search section 29.

The storage section 21 stores therein the open data. Specifically, the storage section 21 stores therein the open date such that the first identification information and the color measurement data of each of the plurality of first components are associated with each other. The storage section 21 is realized by a hard disk drive or the like of the server 17.

The communication section 23 is operable to perform communications between the server 17 and an external device (e.g., the database 15 and the color measurement data processing device 7). The communication section 23 is realized by a CPU, a RAM, a ROM, a communication interface and others of the server 17. The communication section 23 has functions of a receiving section 25 and a transmitting section 27.

The receiving section 25 is operable to receive the first identification information transmitted from the color measurement data processing device 7 via the Internet 3.

The transmitting section 27 is operable to transmit the first color measurement data read by the search section 29 described in detail below, to the color measurement data processing device 7 via the Internet 3.

The search section 29 is operable to search the first color measurement data corresponding to the first identification information received by the receiving section 25, from among the open data stored in the storage section 21, to thereby read the corresponding first color measurement data from the storage section 21. That is, the search section 29 functions as a reading section for reading, from the storage section 21, the first color measurement data corresponding to the first identification information received by the receiving section 25. The search section 29 is realized by a CPU, a RAM, a ROM and others of the server 17.

Elements composing the second system 5b are the same as the elements composing the first system 5a. Except that, in the second system 5b, a target color to be subjected to color measurement is a color of the second component, instead of a color of the first component, the second system 5b is identical to the first system 5a. That is, the above description about the first system 5a can be read as description about the second system 5b by replacing the first component manufacturer, the first component, the first identification information and the first color measurement data, respectively, with the second component manufacturer, the second component, second identification information and second color measurement data.

The color measurement data processing device 7 comprises a communication section 41, a comparative data generation section 47, a manipulation section 49, a display section 51 and a display control section 53.

The communication section 41 is operable to perform communications between the color measurement data processing device 7 and an external device (e.g., the server 17). The communication section 41 is realized by a CPU, a RAM, a ROM, a communication interface and others of the color measurement data processing device 7. The communication section 41 has functions of an identification information transmitting section 43 and a color measurement data receiving section 45.

The identification information transmitting section 43 is operable to transmit the first identification information to the server 17 of the first system 5a and transmit the second identification information to the server 17 of the second system 5b.

The color measurement data receiving section 45 is operable to receive the first color measurement data transmitted from the server 17 of the first system 5a via the Internet 3 and receive the second color measurement data transmitted from the server 17 of the second system 5b via the Internet 3.

The comparative data generation section 47 is operable to generate comparative data capable of enabling the color exhibited by the first component and the color exhibited by the second component to be compared with each other, using the first color measurement data and the second color measurement data received by the color measurement data receiving section 45. The comparative data generation section 47 is realized by a CPU, a RAM, a ROM and others of the color measurement data processing device 7.

For example, a color difference between the color exhibited by the first component and the color exhibited by the second component may be formed as the comparative data, or color values of the color exhibited by the first component and color values of the color exhibited by the second component may be formed as the comparative data.

The manipulation section 49 is a manipulation panel to be used by an operator of the color measurement data processing device 7 to manipulate the color measurement data processing device 7.

The display section 51 is operable to display, on a screen, an inspection result obtained by comporting the color exhibited by the first component with the color exhibited by the second component using the comparative data, and others.

The image control section 53 is operable to perform control of causing the display section 51 to display the inspection result, and others. The image control section 53 is realized by a CPU, a RAM, a ROM and others of the color measurement data processing device 7.

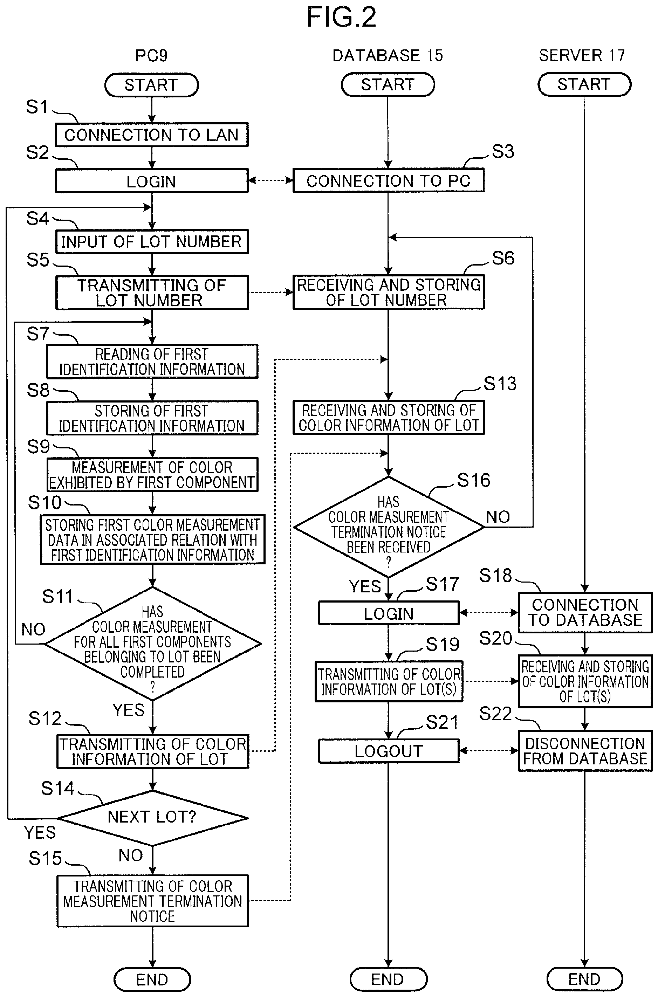

Next, an operation of the color measurement processing system 1 according to this embodiment will be described. The operation of the color measurement processing system 1 consists of an operation to be executed by the first system 5a, an operation to be executed by the second system 5b, and an operation of the color measurement data processing device 7. First of all, the operation to be executed by the first system 5a will be described using FIGS. 1 and 2. FIG. 2 is a flowchart illustrating this operation. It should be noted that the PC 9, the reader 11, the color measurement unit 13, the database 15, the server 17 and the LAN 19 in the following description are elements constituting the first system 5a, but not elements constituting the second system 5b.

A person who measures a color exhibited by the first component (the person will hereinafter be referred to as "measurer") operates the PC 9 to connect the PC 9 to the LAN 19 (step S1). The measurer operates the PC 9 to input a user ID and a password. The PC 9 transmits the input user ID and password to the database 15 via the LAN 19. This allows the PC 9 to log in to the database 15 (step S2), so that the database 15 is connected to the PC 9 (step S3).

Assume that the first component manufacturer controls or manages the first component in units of lot. The measurer operates the PC 9 to input a lot number identifying a lot to be subjected to color measurement (step S4). The PC 9 transmits the input lot number to the database 15 via the LAN 19 (step S5). The database 15 receives and stores therein the lot number transmitted thereto (step S6).

The measurer uses the reader 11 to read the first identification information indicated by a tag affixed to one first component of a first component group composing a lot corresponding to the input lot number (step S7). The PC 9 stores the first identification information read by the reader 11 (step S8).

The measurer uses the color measurement unit 13 to measure a color of the first component whose first identification information was read in the step S7 (step S9). Then, the color measurement unit 13 generates first color measurement data representing the measured color, and transmits the first color measurement data to the PC 9. The PC 9 stores therein the first color measurement data transmitted thereto, in associated relation with the first identification information stored in the step S8 (step S10).

When the color measurement for all of the first components belonging to the first component group composing the lot has not been yet completed (NO in step S11), the measurer returns to the step S7.

The color measurement for all of the first components belonging to the first component group composing the lot has been completed (YES in the step S11), the measurer operates the PC 9 to transmit color information of the lot to the database 15 via the LAN 19 (step S12). The color information of the lot contains the first color measurement data and the first identification information regarding each of the first components belonging to the first component group composing the lot, device information of the color measurement unit 13, date of the color measurement, conditions of the color measurement, and conditions of observation.

The database 15 receives and stores therein the color information of the lot transmitted from the PC 9 (step S13). The color information of the lot forms the aforementioned color data of the first component.

When there is the next lot (YES in step S14), the measurer returns to the step S4. When there is no next lot (NO in step S14), the measurer operates the PC 9 to input termination of the color measurement. Thus, the PC 9 transmits a color measurement termination notice to the database 15 via the LAN 19 (step S15).

After the step S13, when the database 15 has not yet received any color measurement termination notice (NO in step S16), i.e., when the color measurement is performed for a first component group composing the next lot, database 15 returns to the step S6.

When the database 15 has received the color measurement termination notice (YES in the step S16), it performs processing for logging in to the server 17. This allows the database 15 to log in to the server 17 (step S17), so that the server 17 is connected to the database 15 (step S18).

Then, the database 15 transmits the color information of the lot (when there are a plurality of lots, the color information of the lots) stored in the step S13, to the server 17 via the LAN 19 (step S19). The server 17 receives the color information of the lot transmitted thereto, and stores the color information of the lot in the storage section 21 (step S20).

After the step S19, the database 15 performs logout processing. This allows the database 15 to log out of the server 17 (step S21), so that the server 17 is disconnected from the server 17 (step S22).

The above description about the operation to be executed by the first system 5a can be read as description about an operation to be executed by the second system 5b, by replacing the first component manufacturer, the first component, the first identification information and the first color measurement data, respectively, with the second component manufacturer, the second component, the second identification information and the second color measurement data. Therefore, description about the operation to be executed by the second system 5b will be omitted.

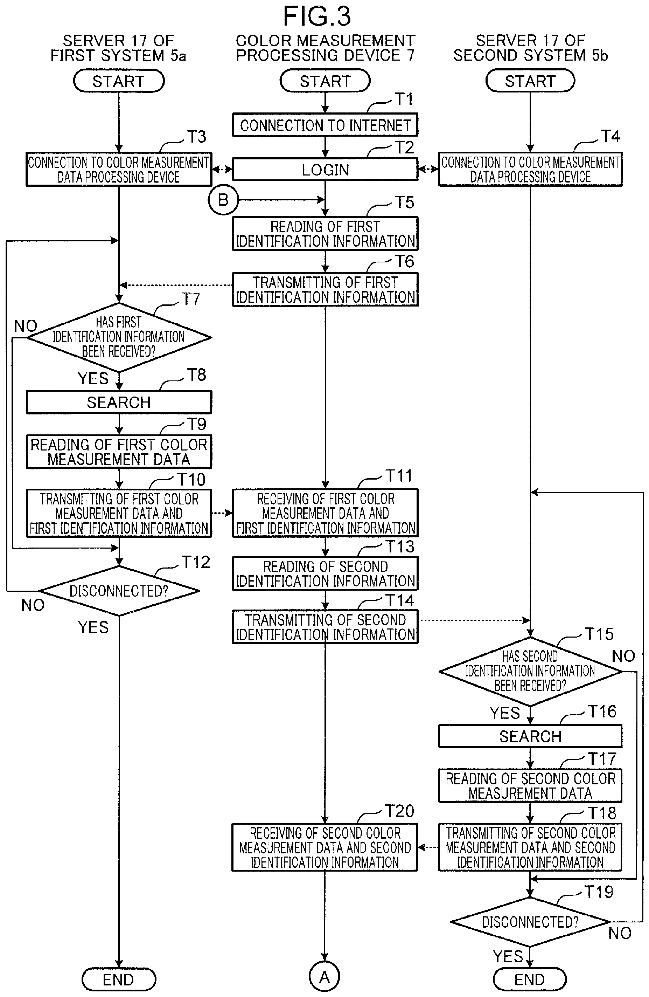

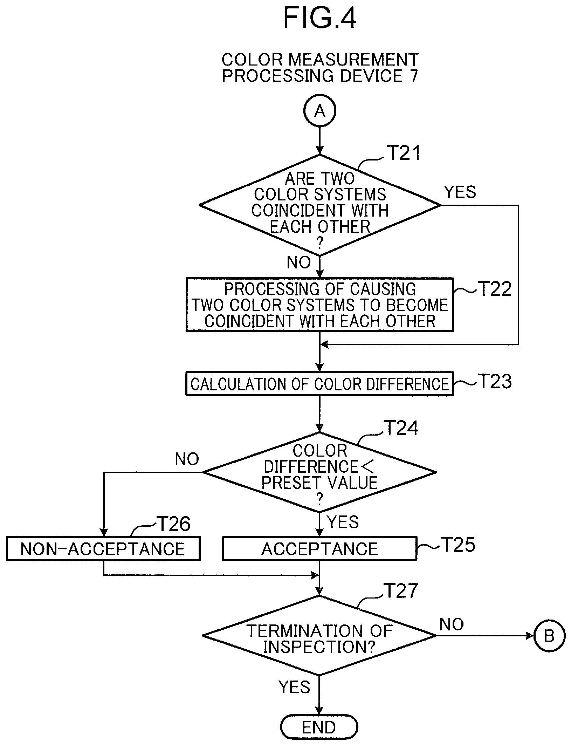

The operation of the color measurement data processing device 7 will be described using FIGS. 1, 3 and 4. FIGS. 3 and 4 are a flowchart illustrating this operation. There are a large number of sets of the first component and the second component, and one product is assembled using the first component and the second component in the same set. In a product assembling process in the assembly manufacturer, a color exhibited by the first component and a color exhibited by the second component in the same set are compared with each other. As a result, when a color difference therebetween falls within a standard (is less than a preliminarily set value), the first component and the second component in this set are evaluated as an acceptable component. When the color difference therebetween is below the standard, the first component and the second component in this set are evaluated as a non-acceptable component.

The server 17 of the first system 5a and the server 17 of the second system 5b are preliminarily connected to the Internet 3. A person who inspects the color difference between the color exhibited by the first component and the color exhibited by the second component (inspector) operates the manipulation section 49 to connect the color measurement data processing device 7 to the Internet 3 (step T1).

The inspector operates the manipulation section 49 to input a user ID and a password for logging in to the server 17 of the first system 5a, and input a user ID and a password for logging in to the server 17 of the second system 5b. The communication section 41 transmits the user ID and the password for logging in to the server 17 of the first system 5a, to the server 17 of the first system 5a via the Internet 3, and transmits the user ID and the password for logging in to the server 17 of the second system 5b, to the server 17 of the second system 5b via the Internet 3. This allows the color measurement data processing device 7 to log in to the server 17 of the first system 5a and the server 17 of the second system 5b (step T2), so that the server 17 of the first system 5a is connected to the color measurement data processing device 7 (step T3) and the server 17 of the second system 5b is also connected to the color measurement data processing device 7 (step T4).

The inspector uses a reader (not depicted) connected to the color measurement data processing device 7 to read the first identification information indicated by the tag affixed to the first component in a first one of the sets (step T5). The identification information transmitting section 43 transmits the read first identification information to the server 17 of the first system 5a via the Internet 3 (step T6).

In the server 17 of the first system 5a, the receiving section 25 determines whether or not it has received the first identification information (step T7). When the receiving section 25 has not yet received any first identification information (NO in the step T7), the server 17 of the first system 5a proceeds to step T12.

When the receiving section 25 has received the first identification information (YES in the step T7), the search section 29 searches the first color measurement data corresponding to the first identification information coincident with the first identification information received by the receiving section 25, from among the plurality of first identification information stored in the storage section 21 (step T8).

The search section 29 reads the searched-out first color measurement data from the storage section 21 (step T9).

The transmitting section 27 transmits the first color measurement data read by the search section 29 and the first identification information corresponding to the read first color measurement data (i.e., the first identification information received by the receiving section 25 in the step T7), to the color measurement data processing device 7 via the internet 3 (step T10).

In the color measurement data processing device 7, the color measurement data receiving section 45 receives the first color measurement data and the corresponding first identification information transmitted thereto in the step T10 (step T11).

The server 17 of the first system 5a determines whether or not it has been disconnected from the color measurement data processing device 7 (step T12). When the color measurement data processing device 7 logs out of the server 17 of the first system 5a, the server 17 of the first system 5a is disconnected from the color measurement data processing device 7.

When the server 17 of the first system 5a is determined to be connected to the color measurement data processing device 7 (NO in the step T12), the operation of the color measurement processing system 1 returns to the step T7. Then, when the inspector uses the reader (not depicted) connected to the color measurement data processing device 7 to read the first identification information indicated by the tag affixed to the first component in one of the sets next to the first set (the step T5), and the identification information transmitting section 43 transmits the read first identification information (the step T6), the processing in the step T7 is executed.

When the server 17 of the first system 5a is determined to be disconnected from the color measurement data processing device 7 (YES in the step T12), any processing in the server 17 of the first system 5a is terminated.

The same processings (the steps T5 to T12) between the server 17 of the first system 5a and the color measurement data processing device 7 are executed between the server 17 of the second system 5b and the color measurement data processing device 7 (steps T13 to T20). These steps will be described below.

The inspector uses a reader (not depicted) connected to the color measurement data processing device 7 to read the second identification information indicated by the tag affixed to the second component in a first one of the sets (step T13). The identification information transmitting section 43 transmits the read second identification information to the server 17 of the second system 5b via the Internet 3 (step T14).

In the server 17 of the second system 5b, the receiving section 25 determines whether or not it has received the second identification information (step T15). When the receiving section 25 has not yet received any second identification information (NO in the step T15), the operation of the color measurement processing system 1 proceeds to step T19.

When the receiving section 25 has received the second identification information (YES in the step T15), the search section 29 searches the second color measurement data corresponding to the second identification information coincident with the second identification information received by the receiving section 25, from among the plurality of second identification information stored in the storage section 21 (step T16).

The search section 29 reads the searched-out second color measurement data from the storage section 21 (step T17).

The transmitting section 27 transmits the second color measurement data read by the search section 29 and the second identification information corresponding to the read second color measurement data (i.e., the second identification information received by the receiving section 25 in the step T15), to the color measurement data processing device 7 via the internet 3 (step T18).

In the color measurement data processing device 7, the color measurement data receiving section 45 receives the second color measurement data and the corresponding second identification information transmitted thereto in the step S10 (step T20).

The server 17 of the second system 5b determines whether or not it has been disconnected from the color measurement data processing device 7 (step T19). When the color measurement data processing device 7 logs out of the server 17 of the second system 5b, the server 17 of the second system 5b is disconnected from the color measurement data processing device 7.

When the server 17 of the second system 5b is determined to be connected to the color measurement data processing device 7 (NO in the step T19), the server 17 of the second system 5b returns to the step T15. Then, when the inspector uses the reader (not depicted) connected to the color measurement data processing device 7 to read the second identification information indicated by the tag affixed to the second component in one of the sets next to the first set (the step T13), and the identification information transmitting section 43 transmits the read second identification information (the step T14), the processing in the step T15 is executed.

When the server 17 of the second system 5b is determined to be disconnected from the color measurement data processing device 7 (YES in the step T19), any processing in the server 17 of the second system 5b is terminated.

The color measurement data processing device 7 determines, with regard to the first set, whether or not a color system of the color represented by the first color measurement data received in the step T11 is coincident with a color system of the color represented by the second color measurement data received in the step T20 (step T21).

When the color measurement data processing device 7 determines that the two color systems are not coincident with each other (NO in the step T21), it executes processing of causing the two color systems to become coincident with each other (step T22).

After the step T22, or when the color measurement data processing device 7 determines that the two color systems are coincident with each other (YES in the step T21), the comparative data generation section 47 calculates, with regard to the first set, a color difference between the color represented by the first color measurement data received in the step T11 and the color represented by the second color measurement data received in the step T20 (step T23).

Then, the comparative data generation section 47 determines whether or not the color difference calculated in the step T23 is less than a preliminarily set value (step T24).

When the comparative data generation section 47 determines that the color difference is less than the preset value (YES in the step T24), the display control section 53 causes the display section 51 to display information indicating that the first and second components in the first set are acceptable components (step T25). On the other hand, the comparative data generation section 47 determines that the color difference is equal to or greater than the preset value (NO in the step T24), the display control section 53 causes the display section 51 to display information indicating that the first and second components in the first set are non-acceptable components (step T26).

When inspection for a color difference between a color exhibited by the first component and a color exhibited by the second component in the last set has not been yet completed (NO in the step T27), the inspector returns to the step T5 to inspect a color difference between a color exhibited by the first component and a color exhibited by the second component in the next set.

When the inspection for the color difference between the color exhibited by the first component and the color exhibited by the second component in the last set has been completed (YES in the step T27), the inspector operates the manipulation section 49 to cause the color measurement data processing device 7 to log out of the server 17 of the first system 5a and the server 17 of the second system 5b, so as to terminate the inspection.

Main advantageous effects of this embodiment will be described. In response to receiving the first color measurement data representing the color exhibited by the first component and the second color measurement data representing the color exhibited by the second component, via the Internet 3 (the steps T11 and T20 in FIG. 3), the color measurement data processing device 7 compares the color exhibited by the first component with the color exhibited by the second component, using the received data (the steps T23 and T24 in FIG. 4) and displays a result of the comparison (the steps T25 and T26 in FIG. 4). Thus, it is possible to mutually compare respective colors exhibited by a first component and a second component composing a product, in a quantified manner.

It is conceivable that the assembly manufacturer prepares the color measurement unit 13 to measure the color exhibited by the first component and the color exhibited by the second component, and compares these colors with each other. In this case, however, the assembly manufacturer needs to execute both the measurement process and the comparison process, so that heavy burden is imposed on the assembly manufacturer. In this embodiment, the measurements of the colors exhibited by the first and second components can be undertook, respectively, by the first and second component manufacturers, and the comparison between the color exhibited by the first component and the color exhibited by the second component can be undertake by the assembly manufacturer, so that it becomes possible to reduce burden on the assembly manufacturer.

Assuming that one and the other of the first component and the second component are, respectively, a display panel (e.g., a liquid crystal panel or an organic EL pane) and an outer frame holding (supporting) the display panel, and colors of the one and the other are, respectively, a color of a screen displayed on the display panel and a color of the outer frame, there are the following facts (1) to (3).
(1) The first component and the second component form a part of external appearance of a product. Thus, the first component and the second component are viewed from the outside of the product, and therefore management of colors exhibited by the first and second components is important.
(2) In the product, the first component and the second component are located adjacent to each other. In the case where the first and second components are located adjacent to each other, an observer can recognize even a slight difference between the colors exhibited by the first and second components. Thus, in this case, the management of the colors exhibited by the first and second components is particularly important.

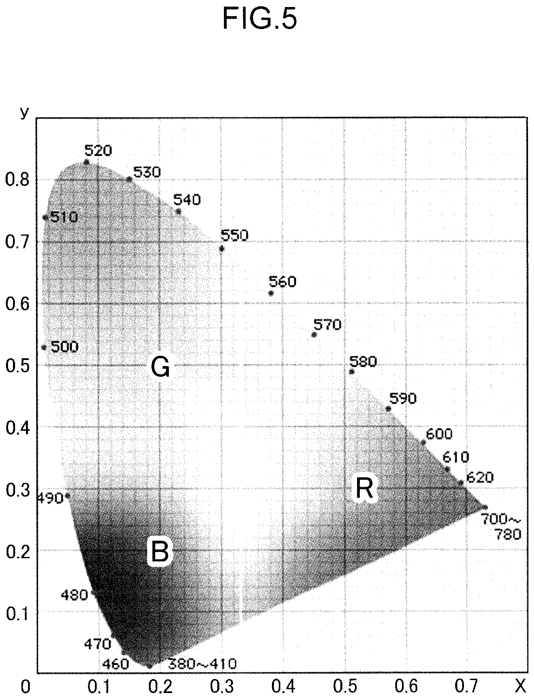

(3) FIG. 5 is a graph depicting a Yxy color system. In this color system, a range of the object color is wider than a range of the light-source color. This is because the light-source color is expressed by a plurality of light sources having different colors (e.g., RGB light sources), and there is a limit to expressible colors. When a value of the color (object color) of the other of the first and second components is out of the range of the light-source color, and largely deviates from the range of the light-source color, a difference between the colors exhibited by the first and second components becomes large. In this embodiment, it becomes possible to quantify such a difference as a color difference.

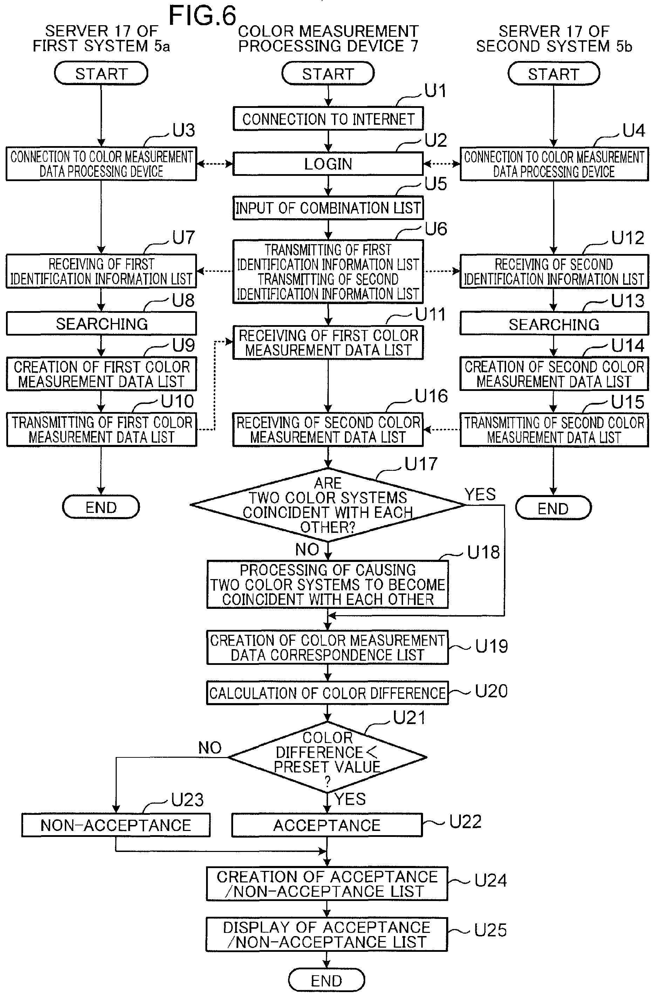

A first modification of the above embodiment will be described mainly using FIGS. 1 and 6. FIG. 6 is a flowchart illustrating the first modification. In the above embodiment, a color difference between the color exhibited by the first component and the color exhibited by the second component in each set is inspected in the product assembling process, whereas, in the first modification, after completion of assembling of a given number of products, a color difference between the color exhibited by the first component and the color exhibited by the second component in each of the given number of sets is inspected at once.

Processings in steps U1 to U4 are the same as the processings in the steps T1 to T4 depicted in FIG. 3.

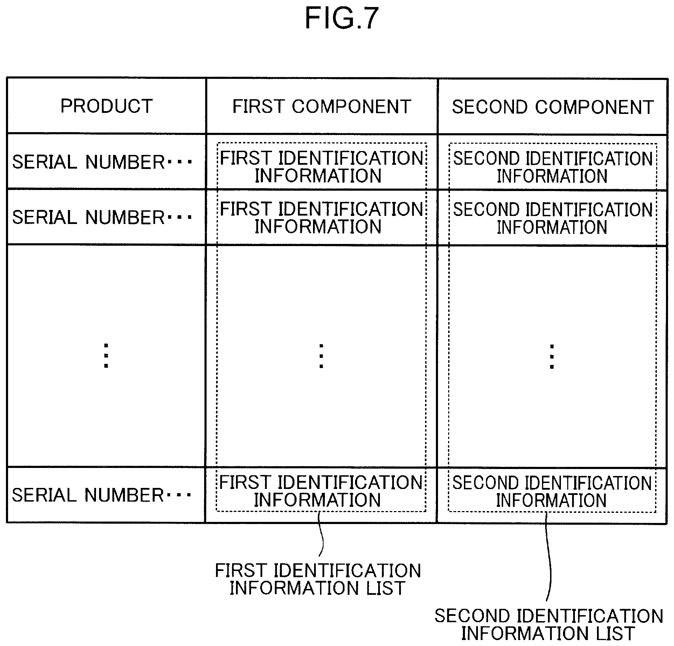

An inspector preliminarily creates a list of combinations of first identification information and second identification information depicted in FIG. 7. The list depicted in FIG. 7 presents a product serial number, first identification information of a first component constituting a product identified by the number, and second identification information of a second component constituting the product identified by the number.

The inspector inputs the combination list depicted in FIG. 7 into the color measurement data processing device 7 (step U5). The input may be manual input using the manipulation panel 49 or may be barcode input using the reader.

The identification information transmitting section 43 transmits a first identification information list which is a list of gathering the first identification information depicted in FIG. 7, to the server 17 of the first system 5a via the Internet 3, and transmits a second identification information list which is a list of gathering the second identification information depicted in FIG. 7, to the server 17 of the second system 5b via the Internet 3 (step U6).

In the first system 5a, the receiving section 25 receives the first identification information list transmitted from the color measurement data processing device 7 (step U7).

In the first system 5a, the search section 29 searches for corresponding the first color measurement data for each of the first identification information contained in the first identification information list received by the receiving section 25, from among the plurality of first identification information stored in the storage section 21 (step U8).

The search section 29 reads the first color measurement data searched in the step U8, from the storage section 21, and creates a list of the first color measurement data searched in the step U8 and the corresponding first identification information (first color measurement data list) (step U9).

In the first system 5a, the transmitting section 27 transmits the first color measurement data list created in the step U9, to the color measurement data processing device 7 via the Internet 3 (step U10). Then, the operation of the first system 5a is terminated.

In the color measurement data processing device 7, the color measurement data receiving section 45 receives the first color measurement data list transmitted in the step U10 (step U11).

The same processings (the steps U7 to U11) between the server 17 of the first system 5a and the color measurement data processing device 7 are executed between the server 17 of the second system 5b and the color measurement data processing device 7 (steps U12 to U16). These steps will be described below.

In the second system 5b, the receiving section 25 receives the second identification information list transmitted from the color measurement data processing device 7 (step U12).

In the second system 5b, the search section 29 searches for corresponding the second color measurement data for each of the second identification information contained in the second identification information list received by the receiving section 25, from among the plurality of second identification information stored in the storage section 21 (step U13).

The search section 29 reads the second color measurement data searched in the step U13, from the storage section 21, and creates a list of the second color measurement data searched in the step U13 and the corresponding second identification information (second color measurement data list) (step U14).

In the second system 5b, the transmitting section 27 transmits the second color measurement data list created in the step U14, to the color measurement data processing device 7 via the Internet 3 (step U15). Then, the operation of the second system 5b is terminated.

In the color measurement data processing device 7, the color measurement data receiving section 45 receives the second color measurement data list transmitted in the step U15 (step U16).

The color measurement data processing device 7 determines whether or not a color system of the color represented by first color measurement data contained in the first color measurement data list received in the step U11 is coincident with a color system of the color represented by second color measurement data contained in the second color measurement data list received in the step U16 (step U17).

When the color measurement data processing device 7 determines that the two color systems are not coincident with each other (NO in the step U17), it executes processing of causing the two color systems to become coincident with each other (step U18).

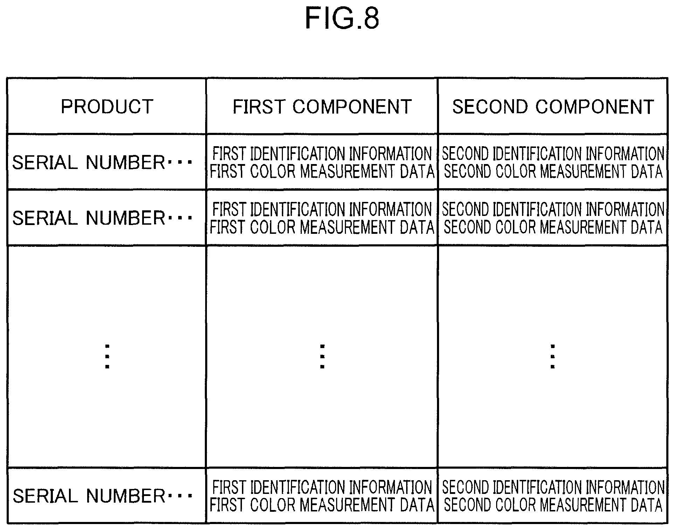

After the step U18, or when the color measurement data processing device 7 determines that the two color systems are coincident with each other (YES in the step U17), the comparative data generation section 47 creates a color measurement data correspondence list depicted in FIG. 8, using the list in FIG. 7, the first color measurement data list obtained in the step U11 and the second color measurement data list obtained in the step U16 (step U19). The list depicted in FIG. 8 presents: a product serial number; first identification information and first color measurement data of a first component constituting a product identified by the number; and second identification information and second color measurement data of a second component constituting the product identified by the number.

The comparative data generation section 47 subjects each set of the first component and the second component to processings in steps U20, U21, U22 and U23, using the color measurement data correspondence list depicted in FIG. 8. The steps U20, U21, U22 and U23 are identical, respectively, to the steps T23, T24, T25 and T26, and therefore description thereof will be omitted.

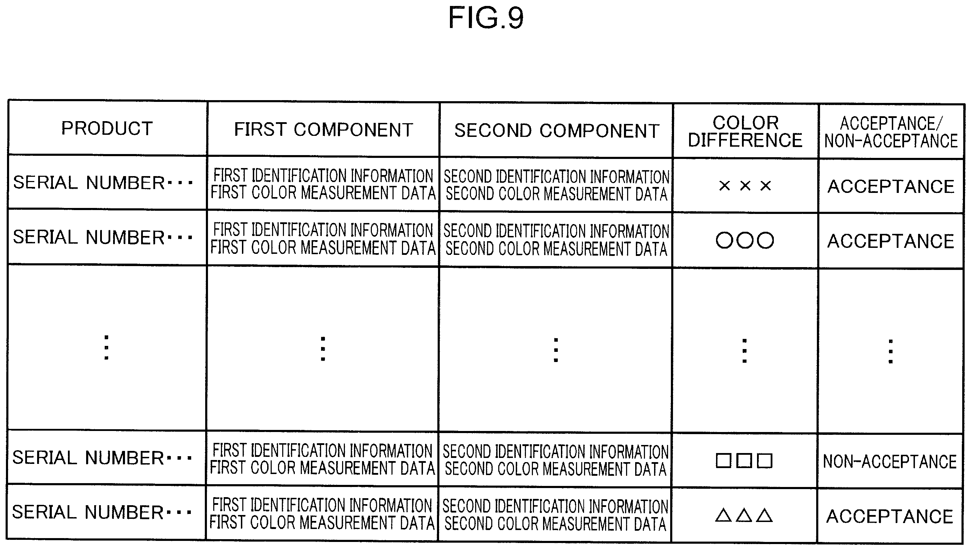

With respect to each set of the first component and the second component, the comparative data generation section 47 creates an acceptance/non-acceptance list depicted in FIG. 9 (step S24). The list depicted in FIG. 9 presents: a product serial number; first identification information and first color measurement data of a first component constituting a product identified by the number; second identification information and second color measurement data of a second component constituting the product identified by the number; color difference; and acceptance/non-acceptance.

The display control section 53 causes the display section 51 to display the list depicted in FIG. 9 (step U25). The inspector operate the manipulation section to cause the color measurement data processing device 7 to log out of the server 17 of the first system 5a and the server 17 of the second system 5b, so as to terminate the inspection. When there are a plurality of the lists depicted in FIG. 7, after the step U25, the operation of the color measurement data processing device 7 returns to the step U5.

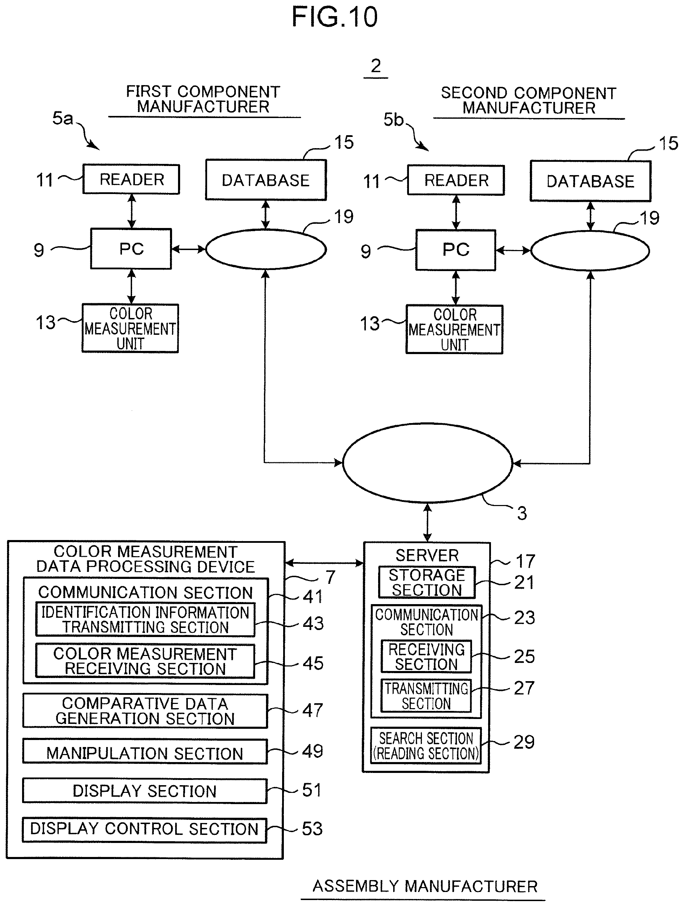

A second modification of the above embodiment will be described. FIG. 10 is a block diagram depicting a color measurement processing system 2 of the second modification. Each of the first system 5a and the second system 5b is devoid of the server 17, and the assembly manufacturer is internally provided with the color measurement data processing device 7, and the server 17 connected to the Internet 3.

In the color measurement processing system 1 depicted in FIG. 1, the server 17 storing therein the first color measurement data (the server 17 of the first system 5a) and the server 17 storing therein the second color measurement data (the server 17 of the second system 5b) are installed, respectively, in separate locations. Differently, in the second modification, the first color measurement data and the second color measurement data are stored in a single server 17, i.e., the single server 17 has both functions of the server 17 of the first system 5a and the server 17 of the second system 5b.

An example where two servers 17 are installed, respectively, within the first component manufacturer and the second component manufacturer, as depicted in FIG. 1, and an example where a single server 17 is installed within the assembly manufacturer, as depicted in FIG. 1, have been described. However, in the case where such a server 17 is a cloud server, the installation location of the server 17 is not fixed.

A third modification of the above embodiment will be described. Assume that the first component is a vehicle body of an automotive vehicle, and the second component is a bumper of the automotive vehicle. Data about a color of the vehicle body coated with paint (first color measurement data) measured by a paint department in a component manufacturer fabricating the vehicle body, and data about a color of the bumper coated with paint (second color measurement data) measured by a paint department in a component manufacturer fabricating the bumper, are stored in the server(s) 17 (FIG. 1 or 10). The assembly manufacturer can obtain the data about the colors. Assume a situation where, in the assembly manufacturer, after attaching the bumper to the vehicle body, the color of the vehicle body coated with paint and the color of the bumper coated with paint are compared with each other, using the color measurement processing system 1 according to the above embodiment. In this situation, when, as a result of the comparison, the combination is evaluated as non-acceptable, a need for a work of detaching the bumper from the vehicle body arises. Therefore, in the third embodiment, in the assembly manufacturer, before attaching the bumper to the vehicle body, the color of the vehicle body coated with paint and the color of the bumper coated with paint are compared with each other, using the color measurement processing system 1 according to the above embodiment. When, as a result of the comparison, the combination is evaluated as acceptable, the bumper is attached to the vehicle body. In the third modification, as a result of comparison between the color of the vehicle body coated with paint and the color of the bumper coated with paint, even when the combination is evaluated as non-acceptable, the need for the work of detaching the bumper from the vehicle body can be eliminated, so that it becomes possible to provide enhanced work efficiency of assembling of an automotive vehicle.

### (Outline of Embodiment)

According to a first aspect of the present disclosure, there is provided a color measurement data processing device comprising: a color measurement data receiving section which receives, via a network, first color measurement data representing a color exhibited by a first component constituting a product, and second color measurement data representing a color exhibited by a second component different from the first component and constituting the product; and a comparative data generation section which generates comparative data capable of enabling the color exhibited by the first component and the color exhibited by the second component to be compared with each other, using the first color measurement data and the second color measurement data received by the color measurement data receiving section.

The color measurement data processing device according to the first aspect of the present disclosure is operable to receive, via the network, the first color measurement data representing the color exhibited by the first component and the second color measurement data representing the color exhibited by the second component, and then, using the received data, to generate the comparative data capable of enabling the color exhibited by the first component and the color exhibited by the second component to be compared with each other. Therefore, it becomes possible to compare respective colors of the first and second components composing the product, in a quantified manner.

It is conceivable that an assembly manufacturer prepares a color measurement unit to measure the color exhibited by the first component and the color exhibited by the second component, and compares these colors with each other. In this case, however, the assembly manufacturer needs to execute both the measurement process and the comparison process, so that heavy burden is imposed on the assembly manufacturer. In the color measurement data processing device according to the first aspect of the present disclosure, the measurements of the colors exhibited by the first and second components can be undertook, respectively, by first and second component manufacturers, and the comparison between the color exhibited by the first component and the color exhibited by the second component can be undertook by the assembly manufacturer, so that it becomes possible to reduce burden on the assembly manufacturer.

A color exhibited by a component means a light-source color when the component is a light-emitting component (e.g., a display panel) (the light-source color is, for example, a color of a screen displayed on the display panel), or an object color when the component is a light reflective component such as a resin molded component (e.g., an outer frame of the display panel).

Examples of the comparative data include a color difference between the color exhibited by the first component and the color exhibited by the second component, and color values of the color exhibited by the first component and color values of the color exhibited by the second component.

In one embodiment, the first component and the second component form a part of external appearance of the product.

In the case where the first component and the second component form a part of external appearance of the product, they are viewed from the outside of the product, and therefore management of colors exhibited by the first and second components is important.

In another embodiment, the first component and the second component are located adjacent to each other in the product.

In the case where the first and second components are located adjacent to each other, an observer can recognize even a slight difference between the colors exhibited by the first and second components. Thus, in this case, the management of the colors exhibited by the first and second components is particularly important.

In yet another embodiment, the color exhibited by one of the first and second components is a light-source color, and the color exhibited by the other of the first and second components is an object color.

In a color system, a range of the object color is wider than a range of the light-source color. This is because the light-source color is expressed by a plurality of light sources having different colors (e.g., RGB light sources), and there is a limit to expressible colors. When a value of the color (object color) of the other of the first and second components is out of the range of the light-source color, and largely deviates from the range of the light-source color, a difference between the colors exhibited by the first and second components becomes large. In this color measurement data processing device, it becomes possible to quantify such a difference (e.g., as a color difference).

In still another embodiment, the color exhibited by one of the first and second components is a color of a screen displayed on a display panel, and the color exhibited by the other of the first and second components is a color of an outer frame holding the display panel.

This embodiment is a specific example where the color exhibited by one of the first and second components is a light-source color, and the color exhibited by the other of the first and second components is an object color, wherein the first component and the second component form a part of external appearance of the product, and wherein the first component and the second component are located adjacent to each other in the product.

Examples of the display panel include a liquid crystal panel and an organic EL pane.

In yet still another embodiment, the comparative data generation section generates the comparative data such that it represents a color difference between the color exhibited by the first component and the color exhibited by the second component.

This embodiment is one specific example of the comparative data.

According to a second aspect of the present disclosure, there is provided a color measurement data processing system comprising: the above color measurement data processing device, and a first server unit and a second server unit each connected to the color measurement data processing device via the network, wherein the first server unit comprises: a first storage section which stores therein first identification information identifying the first component, and the first color measurement data, in mutually associated relation; a first receiving section which receives the first identification information transmitted from the color measurement data processing device via the network; a first reading section which reads, from the first storage section, the first color measurement data corresponding to the first identification information received by the first receiving section; and a first transmitting section which transmits the first color measurement data read by the first reading section, to the color measurement data processing device via the network, and the second server unit comprises: a second storage section which stores therein second identification information identifying the second component, and the second color measurement data, in mutually associated relation; a second receiving section which receives the second identification information transmitted from the color measurement data processing device via the network; a second reading section which reads, from the second storage section, the second color measurement data corresponding to the second identification information received by the second receiving section; and a second transmitting section which transmits the second color measurement data read by the second reading section, to the color measurement data processing device via the network, and wherein the color measurement data processing device further comprises identification information transmitting section which transmits, via the network, the first identification information and the second identification information, respectively, to the first server unit and the second server unit, and wherein the color measurement data receiving section receives, via the network, the first color measurement data transmitted from the first server unit and the second color measurement data transmitted from the second server unit.

The color measurement data processing system according to the second aspect of the present disclosure is operable, using the first color measurement data stored in the first server and the second color measurement data stored in the second server, to generate the comparative data. The color measurement data processing system according to the second aspect of the present disclosure comprises the color measurement data processing device according to the first aspect of the present disclosure, and therefore has the same functions/effects of the color measurement data processing device according to the first aspect of the present disclosure.

The first server and the second server may be installed, respectively, in separate location. Further, the first server and the second server may be constructed as a single server having both functions of them.

In one embodiment, the color measurement data processing system further comprises a first color measurement unit which measures the color exhibited by the first component and generates the first color measurement data, and a second color measurement unit which measures the color exhibited by the second component and generates the second color measurement data, wherein the first storage section stores therein the first color measurement data generated by the first color measurement unit, in associated relation with the first identification information, and the second storage section stores therein the second color measurement data generated by the second color measurement unit, in associated relation with the second identification information.

According to this feature, a first component manufacturer can use the first color measurement unit to measure the color exhibited by the first component, and a second component manufacturer can use the second color measurement unit to measure the color exhibited by the second component, wherein an assembly manufacturer can use the color measurement data processing device to mutually compare the color exhibited by the first component and the color exhibited by the second component. Thus, the measurement of the color exhibited by the first component and the measurement of the color exhibited by the second component can be undertook, respectively, by the first component manufacturer and the second component manufacturer, and the comparison between the color exhibited by the first component and the color exhibited by the second component can be undertook by the assembly manufacturer, so that it becomes possible to reduce burden on the assembly manufacturer.

According to a third aspect of the present disclosure, there is provided a color measurement data processing method comprising: a first step of receiving, via a network, first color measurement data representing a color exhibited by a first component constituting a product, and second color measurement data representing a color exhibited by a second component different from the first component and constituting the product; and a second step of generateing comparative data capable of enabling the color exhibited by the first component and the color exhibited by the second component to be compared with each other, using the first color measurement data and the second color measurement data received in the first step.

The color measurement data processing method according to the third aspect of the present disclosure has the same functions/effects of the color measurement data processing device according to the first aspect of the present disclosure.

According to a fourth aspect of the present disclosure there is provided a color measurement data processing program which causes a computer to function as: a color measurement data receiving section which receives, via a network, first color measurement data representing a color exhibited by a first component constituting a product, and second color measurement data representing a color exhibited by a second component different from the first component and constituting the product; and a comparative data generation section which generates comparative data capable of enabling the color exhibited by the first component and the color exhibited by the second component to be compared with each other, using the first color measurement data and the second color measurement data received by the color measurement data receiving section.

The color measurement data processing method according to the fourth aspect of the present disclosure has the same functions/effects of the color measurement data processing device according to the first aspect of the present disclosure.

This application is based on Japanese Patent Application Serial No. 2014-254130 filed in Japan Patent Office on December 16, 2014.

While the invention of the present application has been described appropriately and fully by way of the embodiment as above with reference to the drawings in order to express the invention of the present application, it should be appreciated that anyone skilled in the art can readily change and/or modify the embodiment described above. The invention is defined by the appended claims.

## Claims

1. A color measurement data processing device (7) comprising:
a communication section (41) for communication between the color measurement data processing device and an external device, the communication section comprising a communication interface, the communication section being operable to function as an identification information transmitting section (43) and as a color measurement data receiving section (45),
the identification information transmitting section (43) being operable to transmit, via the Internet, first identification information of a first component constituting a product, and second identification information of a second component different from the first component and constituting the product;
the color measurement data receiving section (45) being operable to receive, via the Internet (3), first color measurement data representing a color exhibited by the first component, and to receive, via the Internet, second color measurement data representing a color exhibited by the second component, the first color measurement data corresponding to the first identification information and the second color measurement data corresponding to the second identification information; and
a comparative data generation section (47) which is operable to, before the first component is attached to the second component:
generate, using the first color measurement data and the second color measurement data received by the color measurement data receiving section, comparative data representing a color difference between the color exhibited by the first component and the color exhibited by the second component;
determine whether the color difference is less than a preset value; and
evaluate the first component and the second component as acceptable components when the color difference is less than the preset value, and as non-acceptable components otherwise.

2. A color measurement data processing system (1) comprising:
the color measurement data processing device (7) as recited in claim 1, and a first server unit (17) and a second server unit (17) each connected to the color measurement data processing device via the Internet (3), wherein
the first server unit (17) comprises:
a first storage section (21) which is operable to store therein first identification information identifying the first component, and the first color measurement data, in mutually associated relation;
a first receiving section (25) which is operable to receive the first identification information transmitted from the color measurement data processing device (7) via the Internet (3);
a first reading section (25) which is operable to read, from the first storage section (21), the first color measurement data corresponding to the first identification information received by the first receiving section; and
a first transmitting section (27) which is operable to transmit the first color measurement data read by the first reading section (25), to the color measurement data processing device (7) via the Internet (3), and
the second server unit (17) comprises:
a second storage section (21) which is operable to store therein second identification information identifying the second component, and the second color measurement data, in mutually associated relation;
a second receiving section (25) which is operable to receive the second identification information transmitted from the color measurement data processing device (7) via the Internet (3);
a second reading section (27) which is operable to read, from the second storage section (21), the second color measurement data corresponding to the second identification information received by the second receiving section (25); and
a second transmitting section (27) which is operable to transmit the second color measurement data read by the second reading section, to the color measurement data processing device (7) via the Internet (3),
and wherein the identification information transmitting section (43) is operable to transmit, via the Internet (3), the first identification information and the second identification information, respectively, to the first server unit (17) and the second server unit (17),
and wherein the color measurement data receiving section (45) is operable to receive, via the Internet (3), the first color measurement data transmitted from the first server unit (17) and the second color measurement data transmitted from the second server unit (17).

3. The color measurement data processing system (1) as recited in claim 2, which further comprises
a first color measurement unit (13) which is operable to measure the color exhibited by the first component and generates the first color measurement data, and
a second color measurement unit (13) which is operable to measure the color exhibited by the second component and generates the second color measurement data,
wherein
the first storage section (21) is operable to store therein the first color measurement data generated by the first color measurement unit (13), in associated relation with the first identification information, and
the second storage section (21) is operable to store therein the second color measurement data generated by the second color measurement unit (13), in associated relation with the second identification information.

4. A color measurement data processing method comprising:
a first step of transmitting (T6, T14, U6), via the Internet, first identification information of a first component constituting a product, and second identification information of a second component different from the first component and constituting the product,
a second step of receiving (T11, T20; U11, U16), via the Internet (3), first color measurement data representing a color exhibited by the first component, and receiving, via the Internet, second color measurement data representing a color exhibited by the second component, the first color measurement data corresponding to the first identification information and the second color measurement data corresponding to the second identification information; and
a third step of generating (T21-T26; U17-U25), before the first component is attached to the second component, using the first color measurement data and the second color measurement data received in the first step, comparative data representing a color difference between the color exhibited by the first component and the color exhibited by the second component;
a step of determining (T24; U21) whether the color difference is less than a preset value; and
a step evaluating (T25; U22) the first component and the second component as acceptable components when the color difference is less than the preset value, and as non-acceptable components (T26; U23) otherwise.

5. The color measurement data processing method as recited in claim 4, wherein the first component and the second component are to form a part of external appearance of the product.

6. The color measurement data processing method as recited in claim 4 or 5, wherein the first component and the second component are to be located adjacent to each other in the product.

7. The color measurement data processing method as recited in any one of claims 4 to 6, wherein one of the first and second color measurement data represents a light-source color, and the other one of the first and second color measurement data represents an object color.

8. The color measurement data processing method as recited in claim 7, wherein one of the first and second color measurement data represents a color of a screen displayed on a display panel, and the other of the first and second color measurement data represents a color of an outer frame holding the display panel.

9. A color measurement data processing program which causes a computer, the computer comprising a communication section (41) for communication between the computer and an external device, the communication section comprising a communication interface, to function as:
an identification information transmitting section (43) operable to transmit, via the Internet, first identification information of a first component constituting a product, and second identification information of a second component different from the first component and constituting the product,
a color measurement data receiving section (45) which is operable to receive, via the Internet (3), first color measurement data representing a color exhibited by the first component, and to receive, via the Internet, second color measurement data representing a color exhibited by the second component, the first color measurement data corresponding to the first identification information and the second color measurement data corresponding to the second identification information; and
a comparative data generation section (47) which is operable to, before the first component is attached to the second component:
generate, using the first color measurement data and the second color measurement data received by the color measurement data receiving section (45), comparative data representing a color difference between the color exhibited by the first component and the color exhibited by the second component;
determine whether the color difference is less than a preset value; and
evaluate the first component and the second component as acceptable components when the color difference is less than the preset value, and as non-acceptable components otherwise.

## Patentansprüche

1. Vorrichtung zur Verarbeitung von Farbmessdaten (7), umfassend:
einen Kommunikationsabschnitt (41) zur Kommunikation zwischen der Vorrichtung zur Verarbeitung von Farbmessdaten und einer externen Vorrichtung, wobei der Kommunikationsabschnitt eine Kommunikationsschnittstelle umfasst und so betrieben werden kann, dass er als Übertragungsabschnitt für Identifikationsinformationen (43) und als Empfangsabschnitt für Farbmessdaten (45) fungiert,
wobei der Übertragungsabschnitt für Identifikationsinformationen (43) so betrieben werden kann, dass er über das Internet erste Identifikationsinformationen eines ersten Bauteils, das ein Produkt bildet, und zweite Identifikationsinformationen eines zweiten, vom ersten Bauteil verschiedenen Bauteils, das das Produkt bildet, überträgt;
wobei der Empfangsabschnitt für Farbmessdaten (45) so betrieben werden kann, dass er über das Internet (3) erste Farbmessdaten empfängt, die eine vom ersten Bauteil gezeigte Farbe darstellen, und über das Internet zweite Farbmessdaten empfängt, die eine vom zweiten Bauteil gezeigte Farbe darstellen, wobei die ersten Farbmessdaten den ersten Identifikationsinformationen entsprechen und die zweiten Farbmessdaten den zweiten Identifikationsinformationen entsprechen; und
einen Vergleichsdaten-Erzeugungsabschnitt (47), der so betrieben werden kann, dass er, bevor das erste Bauteil an das zweite Bauteil angebracht wird:
unter Verwendung der vom Empfangsabschnitt für Farbmessdaten empfangenen ersten Farbmessdaten und zweiten Farbmessdaten Vergleichsdaten erzeugt, die einen Farbunterschied zwischen der vom ersten Bauteil gezeigten Farbe und der vom zweiten Bauteil gezeigten Farbe darstellen;
bestimmt, ob der Farbunterschied kleiner als ein voreingestellter Wert ist; und
das erste Bauteil und das zweite Bauteil als akzeptable Bauteile bewertet, wenn der Farbunterschied kleiner als der voreingestellte Wert ist, und andernfalls als nicht akzeptable Bauteile.

2. System zur Verarbeitung von Farbmessdaten (1), umfassend:
die Vorrichtung zur Verarbeitung von Farbmessdaten (7) nach Anspruch 1, und eine erste Servereinheit (17) und eine zweite Servereinheit (17), die jeweils über das Internet (3) mit der Vorrichtung zur Verarbeitung von Farbmessdaten verbunden sind, wobei
die erste Servereinheit (17) umfasst:
einen ersten Speicherabschnitt (21), der so betrieben werden kann, dass er darin erste Identifikationsinformationen, die das erste Bauteil identifizieren, und die ersten Farbmessdaten in gegenseitiger Zuordnung speichert;
einen ersten Empfangsabschnitt (25), der so betrieben werden kann, dass er die von der Vorrichtung zur Verarbeitung von Farbmessdaten (7) über das Internet (3) übertragenen ersten Identifikationsinformationen empfängt;
einen ersten Leseabschnitt (25), der so betrieben werden kann, dass er aus dem ersten Speicherabschnitt (21) die ersten Farbmessdaten liest, die den ersten Identifikationsinformationen entsprechen, die von dem ersten Empfangsabschnitt empfangen wurden; und
einen ersten Übertragungsabschnitt (27), der so betrieben werden kann, dass er die vom ersten Leseabschnitt (25) gelesenen ersten Farbmessdaten über das Internet (3) an die Vorrichtung zur Verarbeitung von Farbmessdaten (7) überträgt, und
die zweite Servereinheit (17) umfasst:
einen zweiten Speicherabschnitt (21), der so betrieben werden kann, dass er darin zweite Identifikationsinformationen, die das zweite Bauteil identifizieren, und die zweiten Farbmessdaten in gegenseitiger Zuordnung speichert;
einen zweiten Empfangsabschnitt (25), der so betrieben werden kann, dass er die von der Vorrichtung zur Verarbeitung von Farbmessdaten (7) über das Internet (3) übertragenen zweiten Identifikationsinformationen empfängt;
einen zweiten Leseabschnitt (27), der so betrieben werden kann, dass er aus dem zweiten Speicherabschnitt (21) die zweiten Farbmessdaten liest, die zweiten Identifikationsinformationen entsprechen, die von dem zweiten Empfangsabschnitt (25) empfangen wurden; und
einen zweiten Übertragungsabschnitt (27), der so betrieben werden kann, dass er die vom zweiten Leseabschnitt gelesenen zweiten Farbmessdaten über das Internet (3) an die Vorrichtung zur Verarbeitung von Farbmessdaten (7) überträgt,
und wobei der Übertragungsabschnitt für Identifikationsinformationen (43) so betrieben werden kann, dass er über das Internet (3) die ersten Identifikationsinformationen und zweiten Identifikationsinformationen an die erste Servereinheit (17) bzw. die zweite Servereinheit (17) überträgt,
und wobei der Empfangsabschnitt für Farbmessdaten (45) so betrieben werden kann, dass er über das Internet (3) die von der ersten Servereinheit (17) übertragenen ersten Farbmessdaten und die von der zweiten Servereinheit (17) übertragenen zweiten Farbmessdaten empfängt.

3. System zur Verarbeitung von Farbmessdaten (1) nach Anspruch 2, das weiter umfasst
eine erste Farbmesseinheit (13), die so betrieben werden kann, dass sie die vom ersten Bauteil gezeigte Farbe misst und die ersten Farbmessdaten erzeugt, und
eine zweite Farbmesseinheit (13), die so betrieben werden kann, dass sie die vom zweiten Bauteil gezeigte Farbe misst und die zweiten Farbmessdaten erzeugt,
wobei
der erste Speicherabschnitt (21) so betrieben werden kann, dass er darin die von der ersten Farbmesseinheit (13) erzeugten ersten Farbmessdaten in Zuordnung zu den ersten Identifikationsinformationen speichert, und
der zweite Speicherabschnitt (21) so betrieben werden kann, dass er darin die von der zweiten Farbmesseinheit (13) erzeugten zweiten Farbmessdaten in Zuordnung zu den zweiten Identifikationsinformationen speichert.

4. Verfahren zur Verarbeitung von Farbmessdaten, umfassend:
einen ersten Schritt des Übertragens (T6, T14, U6), über das Internet, von ersten Identifikationsinformationen eines ersten Bauteils, das ein Produkt bildet, und von zweiten Identifikationsinformationen eines zweiten, vom ersten Bauteil verschiedenen Bauteils, das das Produkt bildet,
einen zweiten Schritt des Empfangens (T11, T20; U11, U16), über das Internet (3), von ersten Farbmessdaten, die eine vom ersten Bauteil gezeigte Farbe darstellen, und des Empfangens über das Internet von zweiten Farbmessdaten, die eine vom zweiten Bauteil gezeigte Farbe darstellen,
wobei die ersten Farbmessdaten den ersten Identifikationsinformationen entsprechen und die zweiten Farbmessdaten den zweiten Identifikationsinformationen entsprechen; und
einen dritten Schritt des Erzeugens (T21-T26; U17-U25), bevor das erste Bauteil an das zweite Bauteil angebracht wird, unter Verwendung der im ersten Schritt empfangenen ersten Farbmessdaten und zweiten Farbmessdaten, von Vergleichsdaten, die einen Farbunterschied zwischen der vom ersten Bauteil gezeigten Farbe und der vom zweiten Bauteil gezeigten Farbe darstellen;
einen Schritt des Bestimmens (T24; U21), ob der Farbunterschied kleiner als ein voreingestellter Wert ist; und
einen Schritt des Bewertens (T25; U22) des ersten Bauteils und des zweiten Bauteils als akzeptable Bauteile, wenn der Farbunterschied kleiner als der voreingestellte Wert ist, und andernfalls als nicht akzeptable Bauteile (T26; U23).

5. Verfahren zur Verarbeitung von Farbmessdaten nach Anspruch 4, wobei das erste Bauteil und das zweite Bauteil einen Teil des äußeren Erscheinungsbildes des Produkts bilden sollen.

6. Verfahren zur Verarbeitung von Farbmessdaten nach Anspruch 4 oder 5, wobei das erste Bauteil und das zweite Bauteil im Produkt nebeneinander angeordnet werden sollen.

7. Verfahren zur Verarbeitung von Farbmessdaten nach einem der Ansprüche 4 bis 6, wobei eines der ersten und zweiten Farbmessdaten eine Lichtquellenfarbe darstellt und das andere der ersten und zweiten Farbmessdaten eine Objektfarbe darstellt.

8. Verfahren zur Verarbeitung von Farbmessdaten nach Anspruch 7, wobei eines der ersten und zweiten Farbmessdaten eine Farbe eines auf einem Anzeigefeld angezeigten Bildschirms darstellt und das andere der ersten und zweiten Farbmessdaten eine Farbe eines äußeren Rahmens darstellt, der das Anzeigefeld hält.

9. Programm zur Verarbeitung von Farbmessdaten, das einen Computer veranlasst, wobei der Computer einen Kommunikationsabschnitt (41) zur Kommunikation zwischen dem Computer und einer externen Vorrichtung umfasst, wobei der Kommunikationsabschnitt eine Kommunikationsschnittstelle umfasst, zu fungieren als:
ein Übertragungsabschnitt für Identifikationsinformationen (43), der so betrieben werden kann, dass er über das Internet erste Identifikationsinformationen eines ersten Bauteils, das ein Produkt bildet, und zweite Identifikationsinformationen eines zweiten, vom ersten Bauteil verschiedenen Bauteils, das das Produkt bildet, überträgt,
ein Empfangsabschnitt für Farbmessdaten (45), der so betrieben werden kann, dass er über das Internet (3) erste Farbmessdaten empfängt, die eine vom ersten Bauteil gezeigte Farbe darstellen, und über das Internet zweite Farbmessdaten empfängt, die eine vom zweiten Bauteil gezeigte Farbe darstellen,
wobei die ersten Farbmessdaten den ersten Identifikationsinformationen entsprechen und die zweiten Farbmessdaten den zweiten Identifikationsinformationen entsprechen; und
ein Vergleichsdaten-Erzeugungsabschnitt (47), der so betrieben werden kann, dass er, bevor das erste Bauteil an das zweite Bauteil angebracht wird:
unter Verwendung der vom Empfangsabschnitt für Farbmessdaten (45) empfangenen ersten Farbmessdaten und zweiten Farbmessdaten Vergleichsdaten erzeugt, die einen Farbunterschied zwischen der vom ersten Bauteil gezeigten Farbe und der vom zweiten Bauteil gezeigten Farbe darstellen;
bestimmt, ob der Farbunterschied kleiner als ein voreingestellter Wert ist; und
das erste Bauteil und das zweite Bauteil als akzeptable Bauteile bewertet, wenn der Farbunterschied kleiner als der voreingestellte Wert ist, und andernfalls als nicht akzeptable Bauteile.

## Revendications

1. Dispositif (7) de traitement de données de mesure de couleur comprenant :
une section (41) de communication pour la communication entre le dispositif de traitement de données de mesure de couleur et un dispositif externe, la section de communication comprenant une interface de communication, la section de communication étant capable de fonctionner comme une section (43) de transmission d'informations d'identification et comme une section (45) de réception de données de mesure de couleur,
la section (43) de transmission d'informations d'identification étant capable de transmettre, via Internet, des premières informations d'identification d'un premier composant constituant un produit, et des secondes informations d'identification d'un second composant différent du premier composant et constituant le produit ;
la section (45) de réception de données de mesure de couleur étant capable de recevoir, via Internet (3), des premières données de mesure de couleur représentant une couleur exhibée par le premier composant, et de recevoir, via Internet, des secondes données de mesure de couleur représentant une couleur exhibée par le second composant, les premières données de mesure de couleur correspondant aux premières informations d'identification et les secondes données de mesure de couleur correspondant aux secondes informations d'identification ; et
une section (47) de génération de données comparatives qui est capable de, avant que le premier composant ne soit fixé au second composant :
générer, en utilisant les premières données de mesure de couleur et les secondes données de mesure de couleur reçues par la section de réception de données de mesure de couleur, des données comparatives représentant une différence de couleur entre la couleur exhibée par le premier composant et la couleur exhibée par le second composant ;
déterminer si la différence de couleur est inférieure à une valeur prédéfinie ; et
évaluer le premier composant et le second composant comme des composants acceptables lorsque la différence de couleur est inférieure à la valeur prédéfinie, et comme des composants non acceptables sinon.

2. Système (1) de traitement de données de mesure de couleur comprenant :
le dispositif (7) de traitement de données de mesure de couleur selon la revendication 1, et une première unité (17) serveur et une seconde unité (17) serveur chacune connectée au dispositif de traitement de données de mesure de couleur via Internet (3), dans lequel
la première unité (17) serveur comprend :
une première section (21) de stockage qui est capable de stocker en son sein des premières informations d'identification identifiant le premier composant, et les premières données de mesure de couleur, en relation mutuellement associée ;
une première section (25) de réception qui est capable de recevoir les premières informations d'identification transmises depuis le dispositif (7) de traitement de données de mesure de couleur via Internet (3) ;
une première section (25) de lecture qui est capable de lire, à partir de la première section (21) de stockage, les premières données de mesure de couleur correspondant aux premières informations d'identification reçues par la première section de réception ; et
une première section (27) de transmission qui est capable de transmettre les premières données de mesure de couleur lues par la première section (25) de lecture, au dispositif (7) de traitement de données de mesure de couleur via Internet (3), et
la seconde unité (17) serveur comprend :
une seconde section (21) de stockage qui est capable de stocker en son sein des secondes informations d'identification identifiant le second composant, et les secondes données de mesure de couleur, en relation mutuellement associée ;
une seconde section (25) de réception qui est capable de recevoir les secondes informations d'identification transmises depuis le dispositif (7) de traitement de données de mesure de couleur via Internet (3) ;
une seconde section (27) de lecture qui est capable de lire, à partir de la seconde section (21) de stockage, les secondes données de mesure de couleur correspondant aux secondes informations d'identification reçues par la seconde section (25) de réception ; et
une seconde section (27) de transmission qui est capable de transmettre les secondes données de mesure de couleur lues par la seconde section de lecture, au dispositif (7) de traitement de données de mesure de couleur via Internet (3),
et dans lequel la section (43) de transmission d'informations d'identification est capable de transmettre, via Internet (3), les premières informations d'identification et les secondes informations d'identification, respectivement, à la première unité (17) serveur et à la seconde unité (17) serveur,
et dans lequel la section (45) de réception de données de mesure de couleur est capable de recevoir, via Internet (3), les premières données de mesure de couleur transmises depuis la première unité (17) serveur et les secondes données de mesure de couleur transmises depuis la seconde unité (17) serveur.

3. Système (1) de traitement de données de mesure de couleur selon la revendication 2, qui comprend en outre
une première unité (13) de mesure de couleur qui est capable de mesurer la couleur exhibée par le premier composant et génère les premières données de mesure de couleur, et
une seconde unité (13) de mesure de couleur qui est capable de mesurer la couleur exhibée par le second composant et génère les secondes données de mesure de couleur,
dans lequel
la première section (21) de stockage est capable de stocker en son sein les premières données de mesure de couleur générées par la première unité (13) de mesure de couleur, en relation associée avec les premières informations d'identification, et
la seconde section (21) de stockage est capable de stocker en son sein les secondes données de mesure de couleur générées par la seconde unité (13) de mesure de couleur, en relation associée avec les secondes informations d'identification.

4. Procédé de traitement de données de mesure de couleur comprenant :
une première étape de transmission (T6, T14, U6), via Internet, de premières informations d'identification d'un premier composant constituant un produit, et de secondes informations d'identification d'un second composant différent du premier composant et constituant le produit,
une deuxième étape de réception (T11, T20 ; U11, U16), via Internet (3), de premières données de mesure de couleur représentant une couleur exhibée par le premier composant, et de réception, via Internet, de secondes données de mesure de couleur représentant une couleur exhibée par le second composant, les premières données de mesure de couleur correspondant aux premières informations d'identification et les secondes données de mesure de couleur correspondant aux secondes informations d'identification ; et
une troisième étape de génération (T21-T26; U17-U25), avant que le premier composant ne soit fixé au second composant, en utilisant les premières données de mesure de couleur et les secondes données de mesure de couleur reçues à la première étape, de données comparatives représentant une différence de couleur entre la couleur exhibée par le premier composant et la couleur exhibée par le second composant ;
une étape de détermination (T24 ; U21) de savoir si la différence de couleur est inférieure à une valeur prédéfinie ; et
une étape d'évaluation (T25 ; U22) du premier composant et du second composant comme des composants acceptables lorsque la différence de couleur est inférieure à la valeur prédéfinie, et comme des composants (T26 ; U23) non acceptables sinon.

5. Procédé de traitement de données de mesure de couleur selon la revendication 4, dans lequel le premier composant et le second composant doivent former une partie de l'apparence externe du produit.

6. Procédé de traitement de données de mesure de couleur selon la revendication 4 ou la revendication 5, dans lequel le premier composant et le second composant doivent être situés adjacents l'un à l'autre dans le produit.

7. Procédé de traitement de données de mesure de couleur selon l'une quelconque des revendications 4 à 6, dans lequel l'une des premières et secondes données de mesure de couleur représente une couleur de source lumineuse, et l'autre des premières et secondes données de mesure de couleur représente une couleur d'objet.

8. Procédé de traitement de données de mesure de couleur selon la revendication 7, dans lequel l'une des premières et secondes données de mesure de couleur représente une couleur d'un écran affiché sur un panneau d'affichage, et l'autre des premières et secondes données de mesure de couleur représente une couleur d'un cadre extérieur tenant le panneau d'affichage.

9. Programme de traitement de données de mesure de couleur qui amène un ordinateur, l'ordinateur comprenant une section (41) de communication pour la communication entre l'ordinateur et un dispositif externe, la section de communication comprenant une interface de communication, à fonctionner comme :
une section (43) de transmission d'informations d'identification capable de transmettre, via Internet, des premières informations d'identification d'un premier composant constituant un produit, et des secondes informations d'identification d'un second composant différent du premier composant et constituant le produit,
une section (45) de réception de données de mesure de couleur qui est capable de recevoir, via Internet (3), des premières données de mesure de couleur représentant une couleur exhibée par le premier composant, et de recevoir, via Internet, des secondes données de mesure de couleur représentant une couleur exhibée par le second composant, les premières données de mesure de couleur correspondant aux premières informations d'identification et les secondes données de mesure de couleur correspondant aux secondes informations d'identification ; et
une section (47) de génération de données comparatives qui est capable de, avant que le premier composant ne soit fixé au second composant :
générer, en utilisant les premières données de mesure de couleur et les secondes données de mesure de couleur reçues par la section (45) de réception de données de mesure de couleur, des données comparatives représentant une différence de couleur entre la couleur exhibée par le premier composant et la couleur exhibée par le second composant ;
déterminer si la différence de couleur est inférieure à une valeur prédéfinie ; et
évaluer le premier composant et le second composant comme des composants acceptables lorsque la différence de couleur est inférieure à la valeur prédéfinie, et comme des composants non acceptables sinon.
